# FASCICULE DE BREVET EUROPEEN

(11) **EP 1 084 384 B1**
(45) Date de publication et mention de la délivrance du brevet: **16.10.2002**
(21) Numéro de dépôt: 99923675.5
(22) Date de dépôt: 04.06.1999
(51) Int. Cl.: G01J 5/04, A47J 37/12, H05B 6/80

(54) **CAPTEUR DE TEMPERATURE ET APPAREIL ELECTROMENAGER COMPORTANT UN TEL CAPTEUR**
TEMPERATURFÜHLER UND HAUSHALTELEKTROGERÄT MIT EINEM SOLCHEN FÜHLER
TEMPERATURE SENSOR AND ELECTRICAL HOUSEHOLD APPLIANCE COMPRISING SAME

(30) Priorité: 09.06.1998 FR 9807672
(43) Date de publication de la demande: 21.03.2001
(73) Titulaire: Moulinex S.A., 14123 Cormelles Le Royal (FR)
(72) Inventeur: ARROUBI, Mustapha, F-14610 Villons les Buissons (FR)
(74) Mandataire: Busquets, Jean-Pierre
(86) Numéro de dépôt international: FR9901327
(87) Numéro de publication internationale: WO99064830

(56) Documents cités:
- WO-A-95/35643
- DE-A- 4 331 574
- GB-A- 2 314 166

## Description

L'invention se rapporte au domaine des capteurs de température à infrarouge, et à celui des appareils électroménagers utilisant de tels capteurs.

Dans certains appareils électroménagers tels que par exemple des fours, en particulier des fours à micro-ondes, il est connu de déterminer au moyen d'un capteur de température sans contact, la température de l'aliment à chauffer.

Un tel capteur de température comprend généralement une plaquette de matériau semi-conducteur présentant un évidement dans lequel est placé un élément sensible qui s'échauffe en réponse au rayonnement infrarouge d'une cible, une couche d'isolation thermique 16 disposée entre ledit élément sensible et ladite plaquette, un élément thermoélectrique qui génère un premier signal électrique représentatif de la différence entre la température de la cible et une température de référence, et un dispositif de détection de température par contact, qui émet un second signal représentatif de la température de référence.

Les signaux électriques émis par ce type de capteur doivent être traités par un circuit électronique pour être exploitables de façon simple et fiable, par exemple pour élaborer une commande agissant sur le fonctionnement de l'appareil.

Dans les appareils de type connu équipés d'un tel capteur, on a prévu de monter des cartes électroniques traitant les signaux émanant du capteur, les circuits électroniques de traitement étant physiquement dissociés dudit capteur.

Une telle disposition présence cependant l'inconvénient de grever le coût de fabrication de l'appareil, du fait du nombre de composants à monter séparément, donc du temps nécessaire à ces opérations et du coût de fabrication des composants.

L'invention se propose de remédier à cet inconvénient, et de réaliser un appareil électroménager constitué par un four comportant un capteur de température du type précité, intégrant au moins une partie de l'électronique de traitement. Un tel appareil est défini dans la revendication 1.

D'autres caractéristiques et avantages de l'invention ressortiront de la description détaillée qui va suivre, à titre d'exemple non limitatif, en référence aux dessins annexés dans lesquels:
- la figure 1 est une vue schématique de côté d'un capteur de type connu;
- la figure 2 est une vue schématique de face de ce même capteur;
- la figure 3 est une vue schématique de face d'un capteur suivant l'invention;
- la figure 4 est une vue schématique de face d'un capteur suivant un autre mode de réalisation de l'invention;
- la figure 5 est une vue schématique de face d'un capteur suivant encore un autre mode de réalisation de l'invention;
- la figure 6 est une vue schématique d'un four comportant un capteur conforme à l'invention;

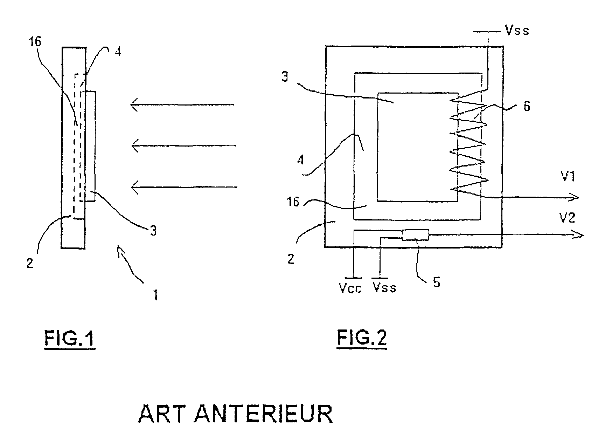

Comme représenté aux figures 1 et 2, le capteur infrarouge 1, destiné à être monté dans un four suivant un mode principal de réalisation, comprend une plaquette de matériau semi-conducteur 2 formant support, dans lequel est pratiqué un évidement où est placé un élément 3 sensible au rayonnement infrarouge d'une cible. Cet élément 3 est par exemple constitué d'une plaquette contenant du bismuth, dont une caractéristique majeure est de s'échauffer de façon sensible en réponse à un rayonnement infrarouge, suivant une loi connue. Un matériau diélectrique isolant thermique 16 est disposé dans l'espace séparant le bord périphérique de l'élément sensible 3 du bord de l'évidement de la plaquette 2 de semi-conducteur. Un élément thermoélectrique 6 du type thermocouple, constitué d'une série de liaisons électriques entre des soudures dites chaudes, solidaires de l'élément sensible, et des soudures dites froides, solidaires du bord de l'évidement du support, fournit un signal électrique V1 proportionnel à la différence de température entre l'élément sensible 3 et le support 2. Un dispositif de détection de température par contact 5 disposé sur le support 2, fournit un signal électrique V2 représentatif de la température du support 2, influencée par la température ambiante et par le rayonnement de diverses pièces environnantes. Cette température du support constitue une température de référence. Un tel dispositif, connu en soi, constitue un capteur de température commercialisé généralement sous la dénomination "thermopile à compensation de température".

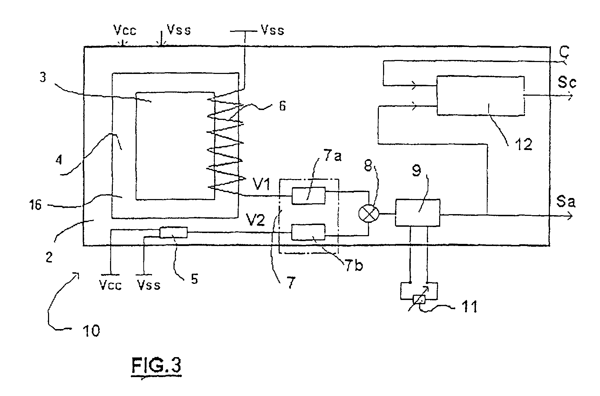

Selon l'invention, et comme représenté à la figure 3, le capteur de température infrarouge 10 comprend des moyens de traitement électronique des signaux V1 et V2, émis par l'élément thermoélectrique 6 et le dispositif de détection de température par contact 5, ces moyens étant constitués par des composants formés dans la plaquette de matériau semi-conducteur 2.

Les moyens de traitement des signaux V1 et V2 comportent en particulier un étage d'amplification 7, constitué d'un premier amplificateur 7a destiné à amplifier le signal V1, et d'un second amplificateur 7b destiné à amplifier le signal V2, ainsi qu'un circuit 8 élaborant un signal représentatif de la température de la cible, à partir des premier et second signaux ainsi amplifiés. Ce circuit 8 est par exemple un circuit sommateur.

Les moyens de traitement comprennent en outre un second étage d'amplification 9, destiné à amplifier le signal représentatif de la température de la cible, dont le gain est réglable au moyen d'un composant 11, telle qu'une résistance variable, extérieur au capteur de température, de sorte que le fonctionnement du capteur soit aisément adaptable aux différents types d'appareils susceptibles d'utiliser un capteur conforme à l'invention. En sortie de ce dernier étage d'amplification 9, le signal obtenu constitue un signal de sortie analogique Sa.

Les moyens de traitement comprennent d'autre part un comparateur 12 recevant un signal de consigne en température C réglé par l'utilisateur, et le signal de sortie Sa du second étage d'amplification 9. Le signal de sortie Sc du comparateur 12, représentatif de l'écart entre la température de la cible et la consigne, est utilisé pour le pilotage d'une charge électrique et son alimentation, ou pour l'affichage.

Grâce à cette disposition, on comprend que les divers composants amplificateurs, sommateurs, étant fabriqués dans la même plaquette de matériau semi-conducteur que le support de l'élément sensible, sont facilement obtenus en grande série, à un coût réduit et avec une fiabilité accrue.

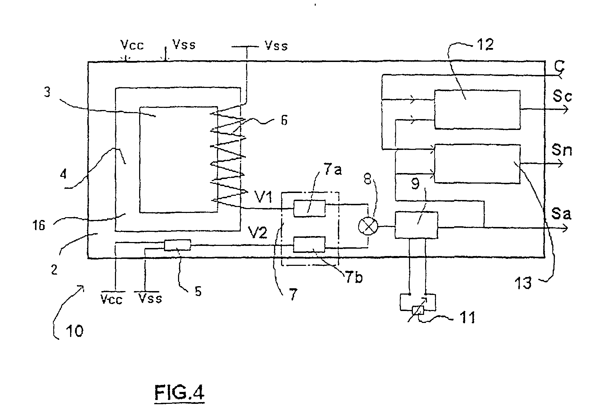

Suivant un mode de réalisation particulier, tel que représenté à la figure 4, les moyens de traitement comportent en outre un convertisseur analogique / numérique 13, permettant de convertir alternativement le signal de sortie Sa du second étage d'amplification 9 et le signal de consigne C, en signaux numériques Sn qui sont transmis à un micro-contrôleur (non représenté) extérieur au capteur de température, ledit micro-contrôleur étant destiné à piloter une charge électrique et son alimentation, par exemple une source de chaleur ou une source de rayonnement.

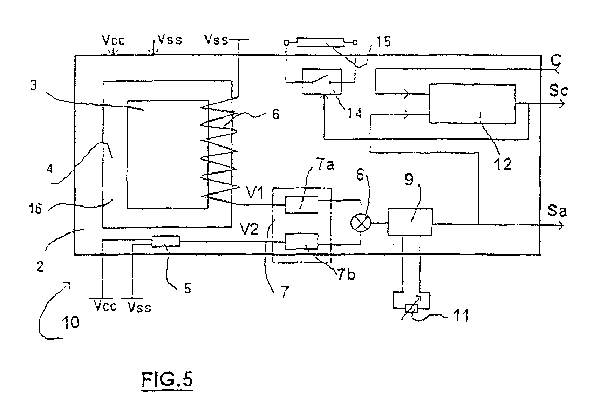

Alternativement, comme représenté à la figure 5, les moyens de traitement comportent un interrupteur électronique 14 commandé par le signal de sortie Sc du comparateur 12, destiné également à piloter une charge électrique et son alimentation 15. Cet interrupteur 14 est réalisé directement dans la plaquette 2 en matériau semi-conducteur.

Les composants électroniques mis en oeuvre dans les dispositifs décrits ci-dessus sont par exemple obtenus par des procédés de gravure, sérigraphie et/ou dépôt électrolytique appliqués à la plaquette de matériau semi-conducteur 2. Ils sont alimentés, comme il a été schématiquement représenté sur les figures, par une source commune qui délivre une tension continue, généralement de 5 Volts, entre une ligne neutre Vss et une ligne au potentiel Vcc.

Un capteur conforme à l'invention tel que décrit précédemment, peut avantageusement être utilisé dans un appareil électroménager.

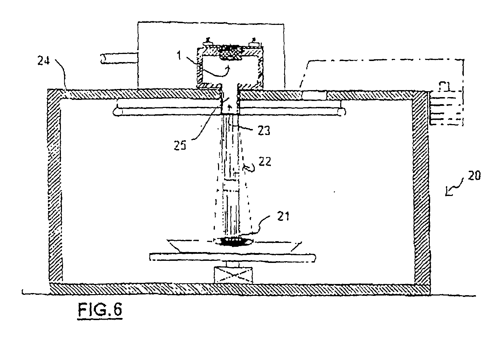

Suivant le mode de réalisation principal comme représenté à la figure 6, un appareil électroménager utilisant un capteur de ce type peut être un four 20, le capteur 1 étant agencé en face d'un trou 25 pratiqué dans la paroi supérieure 24 de la cavité du four 20, avec son élément sensible 3 situé directement en regard de la cible 21 à surveiller. Les rayonnements 22 émanant de la cible 21 sont traités par un dispositif optique 23, tel qu'un filtre et un jeu de lentilles, avant de frapper l'élément sensible 3.

Grâce à la réalisation des composants et du support de l'élément sensible du capteur formés directement dans la même plaquette, on obtient un bloc capteur d'un encombrement réduit et d'un antiparasitage facile à réaliser, ce qui convient bien à son intégration dans les appareils électroménagers, où le gain de place est un facteur important de réduction des coûts de fabrication.

## Revendications

1. Appareil électroménager constitué par un four (20) comportant un capteur de température (1) agencé en face d'un trou (25) pratiqué dans l'une des parois (24) de la cavité du four (20), ledit capteur de température comprenant une plaquette de matériau semi-conducteur (2) présentant un évidement dans lequel est placé un élément sensible (3) qui s'échauffe en réponse au rayonnement infrarouge d'une cible, une couche d'isolation thermique (16) disposée entre ledit élément sensible (3) et ladite plaquette (2), un élément thermoélectrique (6) qui génère un premier signal électrique (V1) représentatif de la différence entre la température de la cible et une température de référence, et un dispositif de détection de température par contact (5), qui émet un second signal (V2) représentatif de la température de référence,
**caractérisé en ce que** le capteur de température (1) comprend des moyens de traitement électronique des signaux (V1, V2) émis par l'élément thermoélectrique (6) et le dispositif de détection de température par contact (5), ces moyens étant constitués par des composants formés dans ladite plaquette (2) de matériau semi-conducteur.

2. Appareil électroménager selon la revendication 1,
**caractérisé en ce que** les moyens de traitement électronique des signaux (V1, V2) comportent un premier étage d'amplification (7), destiné à amplifier les premier et second signaux (V1, V2), et un circuit (8) élaborant un signal représentatif de la température de la cible, à partir des premier et second signaux amplifiés.

3. Appareil électroménager selon la revendication 2,
**caractérisé en ce que** les moyens de traitement électronique comprennent de plus un second étage d'amplification (9), destiné à amplifier le signal représentatif de la température de la cible.

4. Appareil électroménager selon la revendication 3,
**caractérisé** en ce le gain du second étage d'amplification (9) est réglable par action sur un composant (11) extérieur au capteur de température (10).

5. Appareil électroménager selon l'une quelconque des revendications 3 et 4,
**caractérisé en ce que** les moyens de traitement électronique comportent en outre un comparateur (12) recevant un signal de consigne en température (C) réglé par l'utilisateur, et le signal de sortie (Sa) du second étage d'amplification (9).

6. Appareil électroménager selon la revendication 5,
**caractérisé en ce que** les moyens de traitement électronique comportent également un convertisseur analogique/numérique (13) permettant de convertir alternativement le signal de sortie (Sa) du second étage d'amplification (9) et le signal de consigne (C), en signaux numériques (Sn) qui sont transmis à un micro-contrôleur extérieur au capteur de température (10), ledit micro-contrôleur étant destiné à piloter une charge électrique et son alimentation.

7. Appareil électroménager selon la revendication 5,
**caractérisé en ce que** les moyens de traitement électronique comportent en outre un interrupteur électronique (14) commandé par le signal de sortie (Sc) du comparateur (12), et destiné à piloter une charge électrique et son alimentation (15).

## Claims

1. Domestic electrical appliance consisting of an oven (20) having a temperature sensor (1) arranged opposite a hole (25) formed in one of the walls (24) of the cavity of the oven (20), the said temperature sensor comprising a plate of semiconductor material (2) having a recess in which there is placed a sensitive element (3) which heats up in response to the infrared radiation of a target, a thermal insulation layer (16) disposed between the said sensitive element (3) and the said plate (2), a thermoelectrical element (6) which generates a first electrical signal (V1) representing the difference between the temperature of the target and a reference temperature, and a device for detecting temperature by contact (5), which emits a second signal (V2) representing the reference temperature, **characterised in that** the temperature sensor (1) comprises means for the electronic processing of the signals (V1, V2) emitted by the thermoelectric element (6) and the device for detecting temperature by contact (5), these means consisting of components formed in the said plate (2) of semiconductor material.

2. Domestic electrical appliance according to Claim 1, **characterised in that** the means of electronic processing of the signals (V1, V2) have a first amplification stage (7), intended to amplify the first and second signals (V1, V2), and a circuit (8) producing a signal representing the temperature of the target, from the first and second amplified signals.

3. Domestic electrical appliance according to Claim 2, **characterised in that** the electronic processing means also comprise a second amplification stage (9), intended to amplify the signal representing the temperature of the target.

4. Domestic electrical appliance according to Claim 3, **characterised in that** the gain of the second amplification stage (9) can be adjusted by acting on a component (11) external to the temperature sensor (10).

5. Domestic electrical appliance according to either one of Claims 3 and 4, **characterised in that** the electronic processing means also include a comparator (12) receiving a temperature instruction signal (C) set by the user, and the output signal (Sa) of the second amplification stage (9).

6. Domestic electrical appliance according to Claim 5, **characterised in that** the electronic processing means also include an analogue to digital converter (13) for alternately converting the output signal (Sa) of the second amplification stage (9) and the instruction signal (C) into digital signals (Sn) which are transmitted to a microcontroller external to the temperature sensor (10), the said microcontroller being intended to control an electrical load and its supply.

7. Domestic electrical appliance according to Claim 5, **characterised in that** the electronic processing means also include an electronic switch (14) controlled by the output signal (Sc) of the comparator (12), and intended to control an electrical load and its supply (15).

## Patentansprüche

1. Haushaltelektrogerät bestehend aus einem Herd (20) mit einem Temperaturfühler (1), der gegenüber einem in einer der Wände (24) des Innenraums des Herdes (20) ausgebildeten Loch (25) angeordnet ist, wobei der Temperaturfühler eine Plakette aus Halbleitermaterial (2) mit einer Vertiefung aufweist, in der ein empfindliches Element (3) angeordnet ist, das sich bei Einwirkung von Infrarotstrahlung eines Ziels erwärmt, wobei eine Wärmeisolationsschicht (16) zwischen dem empfindlichen Element (3) und der Plakette (2) angeordnet ist und der Temperaturfühler ein thermoelektrisches Element (6) aufweist, welches ein erstes elektrisches Signal (V1), das für den Temperaturunterschied zwischen dem Ziel und einer Bezugstemperatur repräsentativ ist, und eine die Temperatur mit Berührung messende Vorrichtung (5), die ein für die Bezugstemperatur repräsentatives zweites Signal (V2) aussendet, aufweist, **dadurch gekennzeichnet, daß** der Temperaturfühler (1) eine Vorrichtung zur elektronischen Behandlung der von dem thermoelektrischen Element (6) und der mit Berührung arbeitenden Temperaturmeßvorrichtung (5) ausgesandten Signale (V1, V2) aufweist, wobei diese Vorrichtung aus Bauelementen besteht, die in der Plakette (2) aus Halbleitermaterial gebildet sind.

2. Haushaltelektrogerät nach Anspruch 1, **dadurch gekennzeichnet, daß** die Vorrichtung zur elektronischen Behandlung der Signale (V1, V2) eine erste Verstärkungsstufe (7) zum Verstärken der ersten und zweiten Signale (V1, V2) und einen Kreis (8) aufweist, der ausgehend von den verstärkten ersten und zweiten Signalen ein für die Temperatur des Ziels repräsentatives Signal erzeugt.

3. Haushaltelektrogerät nach Anspruch 2, **dadurch gekennzeichnet, daß** die Vorrichtung der elektronischen Behandlung außerdem eine zweite Verstärkerstufe (9) zum Verstärken des für die Temperatur des Ziels repräsentativen Signals aufweist.

4. Haushaltelektrogerät nach Anspruch 3, **dadurch gekennzeichnet, daß** die Verstärkung der zweiten Verstärkerstufe (9) durch Einwirkung auf ein außerhalb des Temperaturfiihlers (10) befindliches Bauelement (11) regelbar ist.

5. Haushaltelektrogerät nach einem der Ansprüche 3 und 4, **dadurch gekennzeichnet, daß** die Vorrichtung zur elektronischen Behandlung außerdem einen Komparator (12) aufweist, der ein vom Benutzer eingestelltes Solltemperatursignal (C) und das Ausgangssignal (Sa) der zweiten Verstärkerstufe (9) empfängt.

6. Haushaltelektrogerät nach Anspruch 5, **dadurch gekennzeichnet, daß** die Vorrichtung zur elektronischen Behandlung auch einen Analog-Digital-Wandler (13) aufweist, der es ermöglicht, alternativ das Ausgangssignal (Sa) der zweiten Verstärkerstufe (9) und das Einstellungssignal (C) in Digitalsignale (Sn) zu wandeln, die einem außerhalb des Temperaturfühlers (10) befindlichen Mikro-Steuerbaustein übermittelt werden, der dazu dient, eine elektrische Last oder deren Speisung zu steuern.

7. Haushaltelektrogerät nach Anspruch 5, **dadurch gekennzeichnet, daß** die Vorrichtung zur elektronischen Behandlung außerdem einen elektronischen Schalter (14) aufweist, der vom Ausgangssignal (Sc) des Komparators (12) gesteuert ist und dazu dient, eine elektrische Last und deren Versorgung (15) zu steuern.
